# EUROPEAN PATENT APPLICATION

(11) **EP 1 842 648 A2**
(43) Date of publication of application: **10.10.2007**
(21) Application number: 07105585.9
(22) Date of filing: 03.04.2007
(51) Int. Cl.: B29C 44/12

(54) **Method for manufacturing a head-rest, specifically for vehicle seats and head-rest manufactured according to such a method**

(30) Priority: 05.04.2006 IT TO20060252
(71) Applicant: Gestind S.p.A., 10050 Bruzolo (IT)
(72) Inventor: Bronzino, Luca, 10050 VILLAR FOCCHIARDO (IT); Pent, Giuliano, 10053 BUSSOLENO (IT)
(74) Representative: Jorio, Paolo

(57) **Abstract**

A head-rest (1), specifically for vehicle seats, presents a cushion-like body (2) formed by foamed material, a sheet material (7) at least partially covering the cushion-like body (2), and an external hollow body (8) partially accommodating the cushion-like body (2); the sheet material presenting a stiffened peripheral edge (10) inserted and withheld in a peripheral seat (13) of the external hollow body (8) to form with the external hollow body a pocket (18) filled with a foam material for forming the cushion-like body.

## Description

The present invention relates to a method for manufacturing a head-rest, specifically for vehicle seats.

Specifically, the present invention relates to a method for manufacturing a head-rest of the type comprising a cushion-like body made of foamed material, a material sheet covering the cushion-like body and an external hollow body, which is made of plastic material or other equivalent material and partially surrounds the cushion-like body.

The known head-rests of the above-described type are normally made by forming a bag-like container with the sheet material, injecting the foamed material within such bag-like container thus making the already covered cushion-like body and by connecting, conveniently by gluing, the external hollow body to the previously formed cushion-like body.

The described manufacturing method implies, on one hand, relatively long manufacturing times and high costs, and, on the other hand, does not ensure reciprocal connection stability of the various parts, above all in the case of collisions or in the presence of high temperatures.

It is the object of the present invention to provide a method for manufacturing a head-rest, which allows to simply and cost-effectively solve the aforementioned problems.

According to the present invention, there is provided a method for manufacturing a head-rest, specifically for vehicle seats, comprising a foamed material cushion-like body, a sheet material at least partially covering said cushion-like body, and an external hollow body partially accommodating said cushion-like body; the method comprising the steps of forming a pocket-like body by coupling a peripheral edge of said sheet material to said external hollow body, of inserting said pocket-like body within a forming mould, and of injecting a foam material inside said pocket-like body to form said cushion-like body; during the injection, said foam material adhering directly and at least partially to said external hollow body and to said covering sheet material.

The present invention further relates to a head-rest for vehicle seats.

According to the present invention, there is made a head-rest, specifically for vehicle seats, the head-rest comprising a foamed material cushion-like body, a sheet material at least partially covering said cushion-like body, and an external hollow body partially accommodating the cushion-like body; characterised in that said sheet material presents a peripheral portion coupled to said hollow body to define a pocket-like body for accommodating said cushion-like body; said cushion-like body adhering directly and at least partially to said covering sheet material and to said external hollow body.

The invention will now be described with reference to the accompanying figures which illustrate a non-limitative example of embodiment thereof, in which:
figure 1 is a perspective view of a preferred embodiment of a head-rest manufactured according to the dictates of the present invention;
figure 2 shows the head-rest of figure 1 arranged inside a forming mould in section and on a magnified scale.

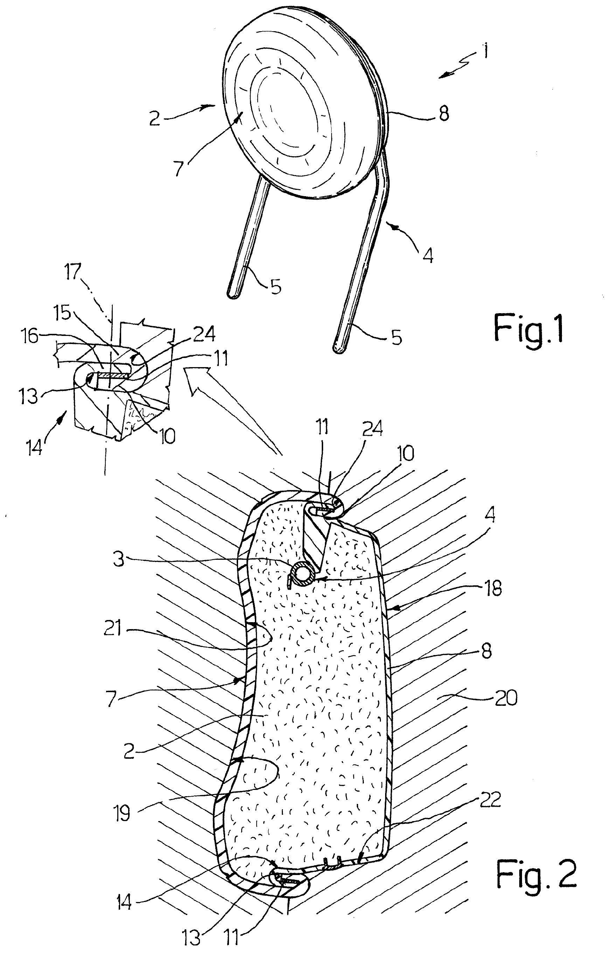

In figure 1, numeral 1 indicates as a whole a head-rest for vehicle seats. Head-rest 1 comprises a cushion-like body 2, which is made of foamed material and embeds an intermediate portion 3 of a frame 4, whose opposite terminal portions protrude outwards from cushion-like body 2 and constitute attachment rods 5 of head-rest 1 to the seat backrest (not shown). Cushion-like body 2 is covered on the front by a sheet material shell 7, and is partially accommodated in a rear hollow body 8, conveniently formed by plastic material and crossed by rods 5.

As shown in figure 2, sheet material shell 7 comprises an external peripheral portion 10, which is conveniently stiffened by means of a stiffening tape 11, preferably of fabric or other equivalent tape material conveniently connected to peripheral portion 10 by gluing, and is inserted in an annular accommodation and retention seat 13 obtained in an external peripheral portion 14 of hollow body 8. Seat 13 presents a dimension measured in a radial direction 17 which approximates by defect the thickness of the portion 10 - tape 11 assembly measured in the same direction 17. Alternatively, peripheral portion 10 is stiffened by being impregnated with a stiffening effect liquid, e.g. a resin or a silicone material. In such case, the mentioned dimension of seat 13 approximates by defect the thickness of impregnated portion 10.

As shown again in figure 2, an intermediate annular portion 15 of shell 7 extending from peripheral portion 10 is folded over a peripheral annular appendix 16 laterally delimiting seat 13.

The described head-rest 1 is made inside a forming mould by means of a so-called "in situ" moulding process in the following manner. Initially, frame 4 is coupled to rear body 8; at the same time, the sheet material is cut and shaped thus making shell 7. Peripheral portion 10 of shell 7 is then stiffened in the specific case by applying tape 11, and then inserted in peripheral seat 13 of rear hollow body 8. During the insertion, portion 15 is folded over appendix 16 thus making a pocket-like body 18. Pocket-like body 18, rigid at the back and soft at the front, and frame 4 are introduced and positioned in a shaped cavity 19 of a forming mould, indicated by numeral 20 (figure 2). Cavity 19 presents a shaped resting surface 21 of the sheet material, a seat 22 facing surface 21 and delimiting a surface 23 complementary to the external rear surface of hollow body 8, and an annular peripheral concave resting surface 24, which at least partially extends in position facing seat 13 and defines a catch for portions 10 and 15. Once body 18 and frame 4 are positioned, mould 20 is closed and the foam material is introduced in pocket-like body 18 in a known manner, which foam forces body 8 and the sheet material against internal surfaces 21 and 22 of mould 20, respectively, and directly adheres onto the internal surfaces of pocket-like body 18. Specifically, following the introduction of foam, peripheral portion 15 is forced onto appendix 16, while portion 10 remains in its initial portion because it abuttingly cooperates against surface 24 which ensures the permanence of portion 10 in seat 13 and the fluid-tight coupling between the sheet material and hollow body 8. As soon as the foam has reticulated, mould 20 is opened and the finished head-rest is extracted from mould 20 itself.

From the above, it is apparent that the described manufacturing method allows to obtain head-rests which are stable in time with particularly low costs and high aesthetic quality. This is essentially consequent to the specific coupling of the edge of the sheet material to the hollow rear body and, specifically, to the presence of seat 13 and to its specific conformation which allows to fold the sheet material over the peripheral portion of the hollow body and to make in such manner a connection which is stabile in time regardless of the working conditions of the head-rest.

The connection stability of the various parts of the head-rest and the maintenance in time of the original aesthetic features are further guaranteed by the direct connection of the foam material defining the cushion-like body both to rear hollow body 8 and to the covering sheet material.

From the above it is apparent that modifications and variants may be made to the described head-rest 1 without departing from the scope of protection defined by the claims. Specifically, retention seat 13 carried by rear hollow body 8 may present different geometries and/or dimensions from those described by way of example, and peripheral portion 10 which is inserted in seat 13 itself may also be different.

Furthermore, the internal surface of the sheet material may be treated to avoid the connection with one or more zones of the cushion-like body following the injection of material within the pocket-like body. This is to vary the aesthetic or softness features of the head-rest with respect to those described and/or illustrated.

## Claims

1. A method for manufacturing a head-rest, specifically for vehicle seats, comprising a cushion-like body formed by foamed material, a sheet material at least partially covering said cushion-like body, and an external hollow body partially accommodating said cushion-like body; the method comprising the steps of forming a pocket-like body by coupling a peripheral edge of said sheet material to said external hollow body, inserting said pocket-like body within a forming mould, and injecting a foam material within said pocket-like body to form said cushion-like body; during the injection, said foam material adhering directly and at least partially to said external hollow body and to said covering sheet material.

2. A method according to claim 1, **characterised in that** the coupling of said sheet material to said external hollow body comprises the steps of inserting a peripheral portion of said sheet material inside a peripheral seat of said external hollow body, and withholding said sheet material in said seat.

3. A method according to claim 2, **characterised in that** said sheet material is withheld in said seat by arranging a portion of the sheet material in contact with a catch surface of said forming mould.

4. A method according to claim 3, **characterised in that** the coupling of said sheet material to said external hollow body comprises the further step of folding an intermediate portion of said sheet material in proximity of said peripheral portion about a portion of said external hollow body delimiting said seat.

5. A method according to any of claims from 2 to 4, **characterised in that** the coupling of said sheet material to said external hollow body comprises the step of stiffening at least a part of said peripheral portion.

6. A method according to claim 5, **characterised in that** the stiffening of said peripheral portion is obtained before inserting the peripheral portion itself in said seat.

7. A method according to claim 6, **characterised in that** the stiffening of said peripheral portion comprises the step of connecting a stiffening tape to the portion itself; said tape then being at least partially inserted in said seat.

8. A method according to any of the preceding claims, **characterised in that** a stiffening frame is inserted inside said pocket-like body before injecting said foam material.

9. A head-rest, specifically for vehicle seats, the head-rest comprising a foamed material cushion-like body, a sheet material at least partially covering said cushion-like body, and an external hollow body partially accommodating the cushion-like body; **characterised in that** said sheet material presents a peripheral portion coupled to said hollow body for defining a pocket-like accommodating body of said cushion-like body; said cushion-like body adhering directly and at least partially to said covering sheet material and to said external hollow body.

10. A head-rest according to claim 9, **characterised in that** said external hollow body comprises a peripheral retention seat and **in that** said peripheral portion is accommodated in said peripheral seat.

11. A head-rest according to claim 10, **characterised in that** said sheet material comprises an intermediate portion in proximity of said peripheral portion folded about a portion of said external hollow body delimiting said seat.

12. A head-rest according to any of the claims from 9 to 11, **characterised in that** it further comprises a layer of stiffening material of said peripheral portion.

13. A head-rest according to claim 12, **characterised in that** said covering material layer consists of a tape applied onto said peripheral portion; said tape resting at least partially in said seat.

14. A head-rest according to claim 10, **characterised in that** said seat presents a dimension measured in a radial direction approximating by defect the thickness of said stiffened peripheral portion measured in the same direction.
